# EUROPÄISCHE PATENTSCHRIFT

(11) **EP 2 827 059 B1**
(45) Veröffentlichungstag und Bekanntmachung des Hinweises auf die Patenterteilung: **19.02.2020**
(21) Anmeldenummer: 14176162.7
(22) Anmeldetag: 08.07.2014
(51) Int. Cl.: F23C 10/00, F23G 5/30, F23G 7/10

(54) **Verbrennungsofenanlage**
Incinerator installation
Installation de four à combustion

(30) Priorität: 10.07.2013 AT 504462013
(43) Veröffentlichungstag der Anmeldung: 21.01.2015
(73) Patentinhaber: Beilschmidt, Alfred, 3150 Wilhelmsburg (AT)
(72) Erfinder: Beilschmidt, Alfred, 3150 Wilhelmsburg (AT)
(74) Vertreter: Müllner, Martin

(56) Entgegenhaltungen:
- DE-A1- 3 924 723
- DE-A1-102006 001 299
- DE-U1- 9 418 234

## Beschreibung

### Technisches Gebiet

Die Erfindung betrifft eine Verbrennungsofenanlage vorzugsweise für die Verbrennung von Biomasse, insbesondere Holzpellets, umfassend eine Zündeinheit, eine Brennkammer mit einer Brennstoffzufuhr, eine Verbrennungsluftzufuhr sowie eine mit einem Wärmetauscher zur Heizwasserbereitung versehenen Abgasführung sowie einen Stirlingmotor zur elektrischen Energiegewinnung, wobei der Erhitzerkopf des Stirlingmotors in der Brennkammer angeordnet ist.

### Stand der Technik

Derartige Anlagen für Wohnhäuser wurden vor einigen Jahren entwickelt und sollen neben der Bereitstellung von Wärmeenergie durch die Verbrennung erneuerbarer Rohstoffe, zusätzlich zumindest einen Teil des Energiebedarfs an elektrischer Energie eines Haushalts abdecken, wodurch die Wirtschaftlichkeit der eingesetzten Brennstoffe erhöht werden soll.

Für die Anschaffung einer Verbrennungsofenanlage ist die dauerhafte Haltbarkeit ohne größeren Wartungsaufwand für zumindest 15-20 Jahre ausschlaggebend. Bei den bisherigen Modellen mit Stirlingmotoren, welche den Erhitzerkopf in der Brennkammer angeordnet haben, treten in der Praxis jedoch bereits nach 2 bis 3 Jahren teure Reparaturen auf, da der Erhitzerkopf regelmäßig getauscht werden muss. Dies ist darauf zurückzuführen, dass es bei der Verbrennung von Holzpellets in der Brennkammer zu teils großen Temperaturschwankungen kommt und dabei Temperaturspitzen von bis zu 1100° C messbar sind. Diese Temperaturspitzen führen zu einer Beschädigung der Oberflächen des Erhitzerkopfes und damit zu einer stark herabgesetzten Lebensdauer. Weiters entstehen bei sehr hohen Temperaturen im Abgas der verbrennenden Biomasse schädliche korrosive Substanzen, welche die Degeneration der Erhitzerkopfoberfläche weiter beschleunigen. Eine Verbrennungsofenanlage mit den Merkmalen des Oberbegriffs des Anspruchs 1 ist aus dem Dokument DE 3924723 A1 bekannt.

### Kurzbeschreibung der Erfindung

Es ist also Aufgabe der vorliegenden Erfindung, eine Verbrennungsofenanlage zu schaffen, welche eine saubere und gleichmäßige Verbrennung der zugeführten Brennstoffe ermöglicht und den Erhitzerkopf des Stirlingmotors vor hohen Temperaturspitzen schützt, wodurch die Lebensdauer der Anlage deutlich erhöht wird.

Diese Aufgabe wird dadurch gelöst, dass in der Brennkammer eine Wirbelschicht aus einer Schüttung von Feststoffpartikeln, vorzugsweise Quarzsand, angeordnet ist, und dass der Erhitzerkopf des Stirlingmotors in der Wirbelschicht angeordnet ist.

Eine Wirbelschicht bezeichnet im Allgemeinen eine Schüttung von Feststoffpartikeln, beispielsweise Quarzsand, welche durch eine aufwärtsgerichtete Strömung eines Fluids, im vorliegenden Falle Luft, bei einem Druck des Fluids oberhalb eines sogenannten Lockerungspunktes in einen fluidisierten Zustand versetzt wird. Der Begriff "fluidisiert" weist in diesem Zusammenhang darauf hin, dass die Schüttung durch die von unten eingeleitete Luft Fluid-ähnliche Eigenschaften aufweist. Diese Art der Verbrennung wird beispielsweise im Kraftwerksbereich eingesetzt, um problematische Stoffe wie Hausmüll als Energielieferant zu verwerten. Der Vorteil der Wirbelschicht besteht darin, dass Brennstoffe sehr sauber und bei einer innerhalb der gesamten Wirbelschicht gleichmäßig verteilten Temperatur verbrannt werden können. Die Anordnung des Erhitzerkopfs des Stirlingmotors in der Wirbelschicht führt also dazu, dass Temperaturspitzen vermieden werden und der Betrieb bei einer konstanten Temperatur, beispielsweise bei ca. 750°-800° C, stattfindet. Korrosive Abgaspartikel, welche im Allgemeinen bei höheren Temperaturen entstehen, werden ebenfalls vermieden und können so die Oberflächen des Erhitzerkopfs nicht schädigen, wodurch die Lebensdauer von diesem massiv erhöht wird.

Erfindungsgemäß ist es ein Merkmal der Erfindung, dass zwischen Verbrennungsluftzufuhr und Brennkammer ein Wärmetauscher vorgesehen ist, wodurch die Verbrennungsluft vorgewärmt ist, und dass die Verbrennungsluft über ein regelbares Ventil durch Öffnungen an der Oberkante der Wirbelschicht und durch Öffnungen an der Unterseite der Wirbelschicht in die Brennkammer leitbar ist.

Erfindungsgemäß ist es ein weiteres Merkmal der Verbrennungsofenanlage, dass ein Verbrennungsluftgebläse vorgesehen ist, welches eine Regeleinrichtung für die Geschwindigkeit und damit den Luftdruck der Verbrennungsluft aufweist. Im Allgemeinen werden, wie eingangs beschrieben, Wirbelschichten in großen Verbrennungsanlagen eingesetzt, welche rund um die Uhr befeuert werden. Bei den bekannten Wirbelschichtbefeuerungen im Kraftwerksbereich werden die Feststoffpartikel (der Sand) auf die Zündtemperatur des Brennstoffes erwärmt. Diese Startenergie wird über Gas- Ölbrenner oder auch elektrisch aufgebracht und an den Sand abgegeben. Durch die von unten in die Wirbelschicht eingebrachte Luft erhält der Brennstoff seine Verbrennungsluft und es erfolgt im Freiraum oberhalb der Wirbelschicht der Wärmeaustrag über Wärmetauscherflächen für z.B. einen Dampfprozess. Luftvorwärmungen sind bei den im Stand der Technik bekannten Großanlagen nicht oder nur beschränkt vorhanden. Aufgrund der Höhe des Wasser- und Energiegehaltes der eingebrachten Brennstoffe muss oftmals im laufenden Betrieb sogar noch Fremdenergie in Form von Wärme als Stütztemperatur für den Sand eingebracht werden. Im Bereich kleiner Anlagen, beispielsweise für Einfamilienhäuser, ergibt sich jedoch das Problem, dass die Verbrennungsofenanlagen nicht permanent betrieben werden und bei jedem Startvorgang erst die Wirbelschicht auf Betriebstemperatur erwärmt werden muss.

Um diesen Vorgang zu beschleunigen und möglichst energiesparend zu realisieren, ist es erfindungsgemäß vorgesehen, neben den oben genannten Merkmalen eine Steuereinheit für das regelbare Ventil vorzusehen, welche während des Startvorgangs bis zum Erreichen einer durchschnittlichen Brennkammertemperatur von etwa 400°-450° C einen ersten Anteil der Verbrennungsluft durch Öffnungen über der Oberkante der Wirbelschicht leitet und gleichzeitig einen zweiten Anteil der Verbrennungsluft durch Öffnungen an der Unterseite der Wirbelschicht leitet, wobei der Luftdruck dieses zweiten Anteils unterhalb des Lockerungspunktes der Wirbelschicht liegt. Die Regeleinrichtung für die Luftgebläsegeschwindigkeit ist ebenfalls durch die Steuereinheit ansteuerbar.

Wird eine ausreichende Temperatur erreicht um den Brennstoff auch innerhalb der Wirbelschicht sicher zu verbrennen, ist es gemäß einem weiteren Merkmal der Erfindung vorgesehen, dass die Steuereinheit ab einer durchschnittlichen Brennkammertemperatur von etwa 400°-450° C die Verbrennungsluft mit einem Luftdruck oberhalb des Lockerungspunktes der Wirbelschicht vollständig durch die Öffnungen an der Unterseite der Wirbelschicht in die Brennkammer leitet.

Die aus der Verbrennung von Brennstoffen entstehende Wärmeenergie wird nur gering über den Abgasmassenstrom aus dem über der Wirbelschicht befindlichen Freiraum ausgetragen. Über die an den Freiraum angrenzenden Luftwärmetauscherflächen wird dem Abgasmassenstrom Wärmeenergie entzogen und an die gerade zugeführte Verbrennungsluft abgegeben, wodurch eine Luftvorwärmung stattfindet. Die unter dem Sandbett einströmende heiße Verbrennungsluft erwärmt zusätzlich zur eingebrachten Biomasse das Sandbett, was den Startvorgang beschleunigt. Das heiße Sandbett überträgt die Wärme gleichmäßig auf den Erhitzerkopf des Stirlingmotors, dieser wiederum wandelt die Wärme teilweise in Bewegungsenergie um.

Der Startvorgang der Verbrennungsofenanlage erfolgt durch die Verbrennung kleiner Mengen von Biomasse auf dem Sandbett, die ähnlich einem herkömmlichen Pelletkessel beispielsweise mittels einer Zündeinheit, beispielsweise mittels eines Heißluftföhns, gezündet werden. Die durch die Zündeinheit erhitzte Verbrennungsluft wird dabei durch Öffnungen an der Oberkante der Wirbelschicht in die Brennkammer geleitet. Die aufströmenden Rauchgase geben die Wärme über den Luftwärmetauscher weitgehend an die zuströmende Verbrennungsluft ab. Die nunmehr weiter erhitzte Verbrennungsluft wird weiterhin oberhalb der Wirbelschicht der Biomasse zugeführt und steigert so weiter die Temperatur. Wenn die Verbrennungsluft ausreichend heiß ist, wird über ein Ventil begonnen, die Verbrennungsluft teilweise von unten in den Sand der Wirbelschicht einzubringen. Die Luftmengen sind dabei so gering, dass das Sandbett nicht allzu sehr in Bewegung kommt und die Biomasse somit auf der Oberfläche der Wirbelschicht verbleibt. Es erfolgt somit auch kein Ablöschen der Flamme durch Ersticken im Sandbett.

Nach weiterem Temperaturanstieg der Verbrennungsluft, beispielsweise auf ca. 400° - 450° C, erfolgt die Reduzierung der Luftzufuhr oberhalb des Sandbetts und die heiße Verbrennungsluft wird nun komplett von unten in das Sandbett eingebracht. Die Regelung der Leistung erfolgt nun über die Menge der eingetragenen Biomasse.

Es ist ferner ein Merkmal der Erfindung, dass der Stirlingmotor mit einem Wärmetauscher zur Heizwasserbereitung versehen ist, welcher vorzugsweise etwa doppelt so viel Wärmemenge an die Heizwasserbereitung liefert wie der Wärmetauscher, der mit der Abgasführung gekoppelt ist.

Nachdem die Wärmeenergie durch den Stirlingmotor teilweise in Bewegungsenergie und in Folge in elektrische Energie umgewandelt wurde, wird die verbleibende Wärmeenergie über Wärmetauscher zur Heizwasserbereitung verwendet. Dabei wird die Mehrheit der Wärmemenge, etwa 2/3, über einen an der Kühlung des Stirlingmotors angeordneten Wärmetauscher an das zu erhitzende Wasser abgegeben. Etwa 1/3 der Wärmemenge wird über einen mit der Abgasführung der Brennkammer verbundenen Wärmetauscher gewonnen.

Bei einem Ausführungsbeispiel der Erfindung für ein durchschnittliches Wohnhaus können mit der erfindungsgemäßen Verbrennungsofenanlage ca. 2-3,5 kW elektrische Leistung und 7-14 kW thermische Leistung erzielt werden.

### Kurze Beschreibung der Zeichnungsfiguren

Die Erfindung wird nun näher anhand der beiliegenden Zeichnungen beschrieben, wobei
Fig. 1 eine schematische Schnittansicht durch eine erfindungsgemäße Verbrennungsofenanlage zeigt und
Fig. 2 eine Schnittansicht durch eine weitere Ausführungsform einer erfindungsgemäßen Verbrennungsofenanlage zeigt.

### Beschreibung der Ausführungsarten

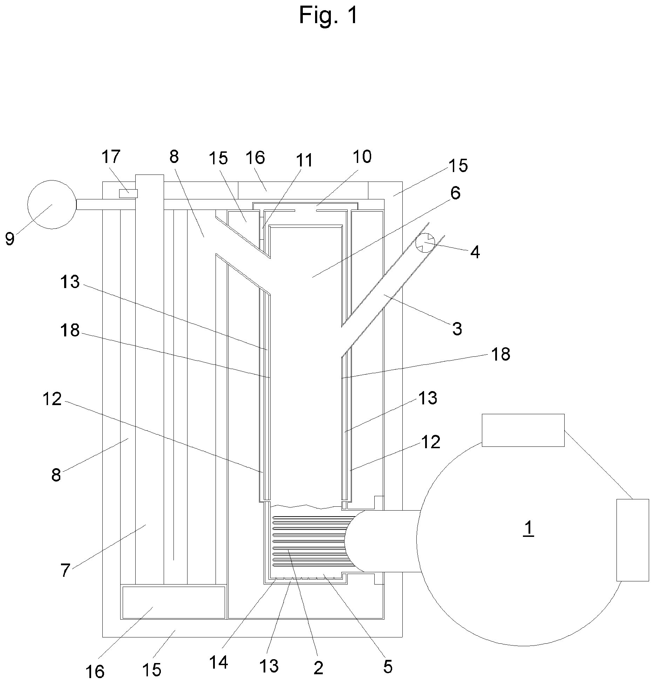

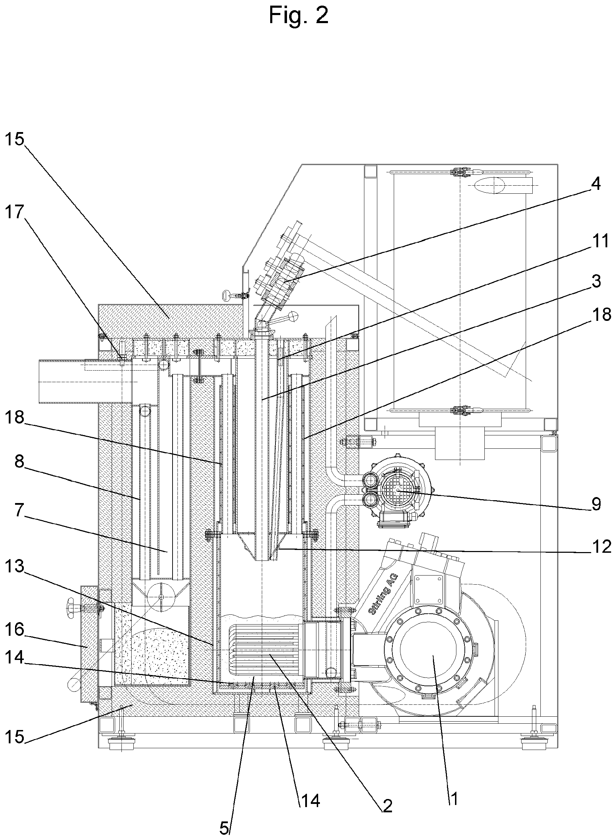

Die dargestellten Verbrennungsofenanlagen der Fig. 1 und 2 umfassen jeweils eine Brennkammer, in welcher eine Wirbelschicht 5 angeordnet ist. Darüber befindet sich ein Freiraum 6. Über eine Brennstoffzufuhr 3 kann mittels einer Zellradschleuse 4 Biomasse, beispielsweise in Form von Pellets in die Brennkammer zugeführt werden. In der Wirbelschicht 5 ist der Erhitzerkopf 2 eines Stirlingmotors 1 angeordnet. Ein Verbrennungsluftgebläse 9 leitet Verbrennungsluft zu einem Ventil 10. Beim Zündvorgang wird die Verbrennungsluft vom Ventil 10 zu einer Zündeinheit 11 (Fig.1), beispielsweise einem Heißluftfön, befördert und von dieser erwärmt. Die Zündeinheit 11 kann aber auch wie bei der Ausführungsform gemäß Fig. 2 als separater Bauteil vorgesehen sein. Über eine erste Verbrennungsluftzuführung 12 wird die Verbrennungsluft durch Öffnungen oberhalb der Wirbelschicht 5 in die Brennkammer geleitet, um den Brennstoff zu zünden. Der entstehende Abgasstrom erhitzt im Freiraum über Wärmetauscherflächen 18 die zugeführte Verbrennungsluft bis schließlich eine ausreichend hohe Temperatur von beispielsweise 400°-450° C erreicht wird. Das Ventil 10 lenkt daraufhin zuerst einen Teil und schließlich die gesamte Verbrennungsluft über eine zweite Verbrennungsluftzuführung 13 zu Öffnungen 14 im Boden der Brennkammer und somit von unten durch die Wirbelschicht 5.

Der Druck der von unten einströmenden Verbrennungsluft kann auch über die Geschwindigkeit des Verbrennungslustgebläses 9 geregelt werden, sodass beim Startvorgang die Wirbelschicht noch nicht fluidisiert wird. Erst nach erreichen einer ausreichenden Temperatur wird der Druck der Verbrennungsluft über den Lockerungspunkt der Wirbelschicht erhöht und diese somit fluidisiert.

Die bei der Verbrennung entstehenden Abgase werden über eine Abgasführung 7 durch einen Wärmetauscher 8 zur Heizwasserbereitung geleitet. Ein weiterer Wärmetauscher zur Heizwasserbereitung ist mit dem Stirlingmotor 1 verbunden (nicht gezeigt). Zur Erhöhung der Effizienz der Anlage ist die gesamte Brennkammer mit einer Isolierung 15 umgeben. Weiters ist eine Reinigungsöffnung 16 für den Zugang zur Abgasführung 7 vorgesehen. Eine Lambdasonde 17 im Abgasstrom dient zur effizienten Steuerung des Verbrennungsvorgangs, einerseits über die Verbrennungsluftzufuhr durch das regelbare Ventil 10 und das Verbrennungsluftgebläse 9, als auch durch die Brennstoffzufuhr durch die Zellradschleuse 4.

## Patentansprüche

1. Verbrennungsofenanlage vorzugsweise für die Verbrennung von Biomasse, insbesondere Holzpellets, umfassend eine Zündeinheit (11), eine Brennkammer mit einer Brennstoffzufuhr (3), Verbrennungsluftzuführungen (12,13) sowie eine mit einem Wärmetauscher (8) zur Heizwasserbereitung versehenen Abgasführung (7) sowie einen Stirlingmotor (1) zur elektrischen Energiegewinnung, wobei der Erhitzerkopf (2) des Stirlingmotors (1) in der Brennkammer in einer Wirbelschicht (5) aus einer Schüttung von Feststoffpartikeln, vorzugsweise Quarzsand, angeordnet ist, **dadurch gekennzeichnet, dass** zwischen Verbrennungsluftzufuhr (12, 13) und Brennkammer ein Wärmetauscher (18) vorgesehen ist, wodurch die Verbrennungsluft vorgewärmt ist, und dass die Verbrennungsluft über ein regelbares Ventil (10) durch Öffnungen über der Oberkante der Wirbelschicht (5) und durch Öffnungen (14) an der Unterseite der Wirbelschicht (5) in die Brennkammer leitbar ist, und dass eine Steuereinheit für das regelbare Ventil vorgesehen ist, welche während des Startvorgangs der Verbrennungsofenanlage bis zum Erreichen einer durchschnittlichen Brennkammertemperatur von etwa 400°-450° C einen ersten Anteil der Verbrennungsluft durch Öffnungen über der Oberkante der Wirbelschicht leitet und gleichzeitig einen zweiten Anteil der Verbrennungsluft durch Öffnungen an der Unterseite der Wirbelschicht leitet, wobei der Luftdruck dieses zweiten Anteils unterhalb des Lockerungspunktes der Wirbelschicht liegt.

2. Verbrennungsofenanlage nach Anspruch 1, **dadurch gekennzeichnet, dass** ein Verbrennungsluftgebläse vorgesehen ist, welches eine Regeleinrichtung für die Geschwindigkeit und damit den Luftdruck der Verbrennungsluft aufweist, wobei die Regeleinrichtung ebenfalls durch die Steuereinheit ansteuerbar ist.

3. Verbrennungsofenanlage nach Anspruch 1 oder 2, **dadurch gekennzeichnet, dass** die Steuereinheit ab einer durchschnittlichen Brennkammertemperatur von etwa 400°-450° C die Verbrennungsluft mit einem Luftdruck oberhalb des Lockerungspunktes der Wirbelschicht vollständig durch die Öffnungen (14) an der Unterseite der Wirbelschicht (5) in die Brennkammer leitet.

4. Verbrennungsofenanlage nach einem der Ansprüche 1 bis 3, **dadurch gekennzeichnet, dass** der Stirlingmotor (1) mit einem Wärmetauscher zur Heizwasserbereitung versehen ist, welcher vorzugsweise etwa doppelt so viel Wärmemenge an die Heizwasserbereitung liefert wie der Wärmetauscher (8), der mit der Abgasführung (7) gekoppelt ist.

## Claims

1. A Combustion furnace plant, preferably for the combustion of biomass, in particular wood pellets, comprising an ignition unit (11), a combustion chamber with a fuel supply (3), combustion air supplies (12, 13) as well as an exhaust passage (7) provided with a heat exchanger (8) for water heating as well as a Stirling engine (1) for generating electrical energy, wherein the heater head (2) of the Stirling engine (1) is arranged in the combustion chamber in a fluidized bed (5) made of a quantity of solid particles, preferably silica sand, **characterized in that** a heat exchanger (18) is provided between combustion air supply (12, 13) and combustion chamber, whereby the combustion air is preheated, and **in that** the combustion air can be conducted into the combustion chamber via an adjustable valve (10) through openings above the upper edge of the fluidized bed (5) and through openings (14) on the underside of the fluidized bed (5), and **in that** a control unit is provided for the adjustable valve which during the starting operation of the combustion furnace plant, until an average combustion chamber temperature of about 400° - 450°C is reached, conducts a first share of the combustion air through openings above the upper edge of the fluidized bed and simultaneously a second share of the combustion air through openings on the underside of the fluidized bed, wherein the air pressure of said second share is below the minimum fluidisation point of the fluidized bed.

2. The combustion furnace plant according to claim 1, **characterized in that** a combustion air fan is provided which includes a regulating device for the velocity and thus for the air pressure of the combustion air, wherein the regulating device is also controllable by the control unit.

3. The combustion furnace plant according to claim 1 or 2, **characterized in that** from an average combustion chamber temperature of approximately 400° - 450°C the control unit guides the combustion air at an air pressure above the minimum fluidisation point of the fluidized bed completely through the openings (14) on the underside of the fluidized bed (5) into the combustion chamber.

4. The combustion furnace plant according to any of claims 1 to 3, **characterized in that** the Stirling engine (1) is provided with a heat exchanger for water heating which preferably supplies about twice as much heat to the water heating compared with the heat exchanger (8) coupled to the exhaust passage (7).

## Revendications

1. Poêle de combustion qui est destiné préférentiellement à la combustion de biomasse, notamment de granulés de bois, et qui comprend une unité d'allumage (11), une chambre de combustion pourvue d'une alimentation en combustible (3), de conduits d'arrivée d'air comburant (12, 13) ainsi que d'un conduit de fumées (7) équipé d'un échangeur de chaleur (8) destiné à produire de l'eau chaude, ainsi qu'un moteur Stirling (1) destiné à produire de l'énergie électrique, la tête de chauffage (2) du moteur Stirling (1) étant disposée au sein de la chambre de combustion dans un lit fluidisé (5) constitué d'un particules solides en vrac, s'agissant préférentiellement de sable siliceux, **caractérisé en ce qu'**un échangeur de chaleur (18) est disposé entre l'alimentation en air comburant (12, 13) et la chambre de combustion, permettant ainsi de préchauffer l'air comburant, et que l'on peut faire passer cet air comburant, à l'aide d'une valve réglable (10), par des ouvertures situées au-dessus du bord supérieur du lit fluidisé (5) et par des ouvertures (14) situées sur la face inférieure du lit fluidisé (5) dans la chambre de combustion, et que ladite valve réglable est pourvue d'une unité de commande laquelle permet de faire passer, pendant de démarrage du poêle de combustion jusqu'à ce qu'une température moyenne de la chambre de combustion d'environ 400 à 450 °C soit atteinte, une première proportion de l'air comburant par des ouvertures situées au-dessus du bord supérieur du lit fluidisé, tout en faisant passer une deuxième proportion de l'air comburant par des ouvertures situées sur la face inférieure du lit fluidisé, la pression d'air de cette deuxième proportion n'étant pas assez élevée pour déclencher la fluidisation dudit lit fluidisé.

2. Poêle de combustion selon la revendication 1, **caractérisé en ce qu'**il est pourvu d'une soufflerie d'air comburant comportant un dispositif qui permet de régler la vitesse et, par conséquent, la pression d'air de l'air comburant, ce dispositif de réglage pouvant également être commandé par ladite unité de commande.

3. Poêle de combustion selon les revendications 1 ou 2, **caractérisé en ce que** ladite unité de commande fait passer, une fois une température moyenne de la chambre de combustion d'environ 400 à 450 °C atteinte, l'intégralité de l'air comburant par les ouvertures (14) situées sur la face inférieure du lit fluidisé (5) dans la chambre de combustion, à une pression d'air suffisamment élevée pour déclencher la fluidisation dudit lit fluidisé.

4. Poêle de combustion selon l'une des revendications 1 à 3, **caractérisé en ce que** le moteur Stirling (1) est pourvu d'un échangeur de chaleur qui permet de produire de l'eau chaude, la quantité de chaleur que ce dernier fournit à la production d'eau chaude étant préférentiellement environ deux fois plus élevée par rapport à l'échangeur de chaleur (8) équipant le conduit de fumées (7).
